# EUROPEAN PATENT APPLICATION

(11) **EP 1 582 469 A1**
(43) Date of publication of application: **05.10.2005**
(21) Application number: 02788618.3
(22) Date of filing: 18.11.2002
(51) Int. Cl.: B65D 1/00, D21H 11/12, D21J 3/10

(54) **FOOD CONTAINER**

(71) Applicant: Aiba, Toshiyuki, Shiga 520-0027 (JP)
(72) Inventor: Aiba, Toshiyuki, Shiga 520-0027 (JP)
(74) Representative: White, Duncan Rohan
(86) International application number: PCT/JP2002/012027
(87) International publication number: WO 2004/045966

(57) **Abstract**

A food container formed by compressing a mixed material composed of unboiled bamboo fibers and mixed fibers prepared by mixing unboiled grass family vegetable fibers and unboiled legume family vegetable fibers such as lespedeza fibers. A food container formed by compressing a mixed material composed of the above mixed material, a small amount of water repellent, and a small amount of paper strength additive.

## Description

### INDUSTRIAL FIELD OF THE INVENTION

The present invention relates to a food container that is mainly com-posed of nonwoody fibers such that whether used as a packaging material for foods or used as a tableware it will be protected well from getting mildewed, and it may be discarded without causing any environmental pol-lution.

### PRIOR ART

As known widely, the prior art food packaging containers and throw-away tableware such as trays, cups, bowls or else have usually been foam-molded using a sheet of any proper resin, for example a polystyrene resin. Some coffee cups and the like tableware have however been made by molding into a shape certain paper sheets each laminated with a synthetic resin sheet.

The prior art food containers formed of those materials are neither disinfectant nor mildewproof. If any raw or unheated food like a daily dish is packaged in these containers, then it will spoil or get mildewed soon, becoming unmarketable. Three kinds of mildews that are blue molds, black molds and black *Cladosporium cladosporioides* are so active and hardy that it has been difficult to prevent them from growing. In a case wherein laminated paper sheets are used to form food containers, a main material thereof is a woody pulp. Woody pulps have adversely caused not only over-deforestation but also needed vast consumption of chemicals. Used food containers of this type may be buried in earth for example at any reclamation site, but they will never completely decay for a long time. If alternatively such used containers are burned, then produce toxic gases causing environmental disruption or pollution. Thus, there has been a strong demand for development of a novel type food container free from these problems.

### DISCLOSURE OF THE INVENTION

The present invention was made to resolve the described drawbacks that had been observed in the packaging, protection and preservation of foods held in or on the prior art containers. An object of the present invention is therefore to provide a food container that can be mass-produced using inexpensive plant materials and/or certain raw materials which had not been utilized on a large scale. The present food container now ren-dered inexpensive, tough and stout has to be hygienic and harmless enough to protect foods from deterioration and damage that would otherwise be caused by various bacteria and mildews. This food container may also be disposed and left in earth to be ready for biodegradation, or alternatively burned without emitting any toxic substances.

According to the present invention, a food container is an article molded by compressing a composition that comprises a non-boiled bamboo fiber blended with a non-boiled mixture of Gramineae plant fibers (other than bamboo fibers) and Leguminosae plant fibers such as Lespedeza fibers. The composition may further contain noticeable amounts of a water repel-lent and a paper-reinforcing agent so as to form a mixture from which the container is molded.

In some preferable embodiments, one of the ingredients of the com-position just noted above may be about 7 - 50 % by weight of an anti-bacterial bamboo fiber originating from bamboo trunks, underground stems, skins and/or cores. The other ingredient may be about 50 - 93 by weight of a boiled mixture of Gramineae plant fiber such as a reed fiber and a Lespedeza fiber, wherein these two fibers are contained generally at a ratio of 1 : 1. The composition may be molded into a shape at a temperature of 180 °C or higher, preferably about 200 °C, under a pressure of about 3 kg/cm² for about 25 sec. Any binders such as those used in the ordinary paper making process need not be added herein to said composition, because hydrogen bonds appearing between the fibers will firmly consolidate them together to give the container a desired shape. Higher contents of the bamboo fiber will make stronger the food container, but its content at about 30 % by weight is preferable in most cases. In a case wherein the con-tainer is intended for use with relatively dry foods such as nuts, dry confectionery or the like, the composition discussed above in this paragraph may suffice well as it is. If however wet foods are packed in or a cold or hot water is poured in the container, then small amounts (for example 3 - 5 % by weight) of a water repellent and a paper-reinforcing agent may be blended with the composition. Silicone resins and rosin derivatives may be preferred as the repellent, and polyacrylamide resins may be used as the waterproofing and reinforcing agent.

As summarized above, the present food container may be manu-factured by thermally and directly compressing in a desired mold cavity the composition that comprises the bamboo fiber and the boiled fiber mixture. Alternatively, the composition may be dispersed in water to form a slurry subsequently screened to give a web. This web will then be pressed into a desired shape. Raw bamboo fibers contained in said composition are of an antibacterial and mildewproof property. Even if spores of any bacteria and/or other spores of mildews will possibly deposit on food from ambient air or occasionally stick to food from any foreign material, the bamboo fibers would inhibit them from germinating and growing to spoil or damage the food.

Moisture content in the material of the present food container is of a self-controllability within a wide range of from about 7 % to 25 %. With ambient humidity getting abnormally high, the material of container will absorb a considerable amount of vapor so as to lower the internal humidity of the container. If contrarily the internal humidity has become too low to keep the food in normal state, the material of container will automatically release the vapor that has been absorbed therein, thus maintaining the normal condition of food. The food container does not only withstand any temporary overdrying of ambient air, but also protect well the food from getting overwetted.

The food container molded in the described manner may be used to package fishes, meat pieces, other fresh foods, dry provisions, lunches or the like fast food. This container may also be a disposable tableware such as a cup for precooked Chinese noodles, a coffee cup, a container or bowl for Japanese noodles, rice-based dishes or the like.

Raw materials that have been discarded uselessly are now utilized to produce the present food container, thereby diminishing material cost and lowering manufacture cost. When dumping any used food containers, they may be combusted at such a low temperature that a burner or furnace is not damaged, never generating any amount of dioxines. If the used containers are thrown away into earth, then underground bacteria and enzymes will function for biodegradation of those containers. A kind of fertilizer as a resultant degradation product will improve soil condition, beneficially to environmental hygiene.

### BRIEF DESCRIPTION OF THE DRAWINGS

Fig. 1 is a perspective view of a food container provided in a first embodiment of the invention;
Fig. 2 is a perspective view of the food container provided in a second embodiment;
Fig. 3 is a longitudinal cross section of the food container of the second embodiment shown in use; and
Fig. 4 is a perspective view of the food container provided in a third embodiment.

### BEST MODES OF CARRYING OUT THE INVENTION

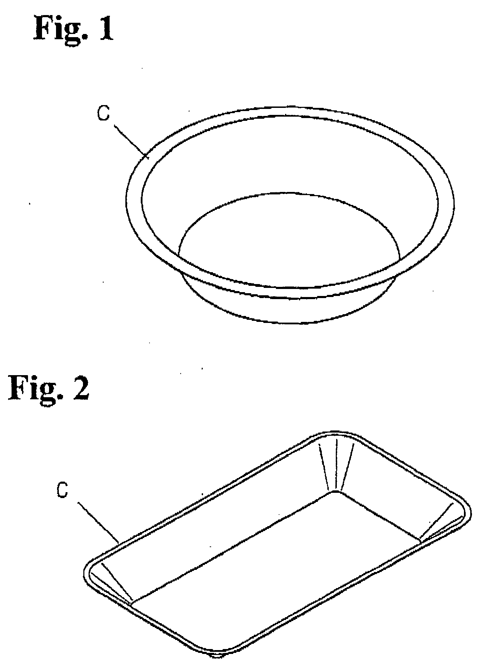

Now, a first embodiment of the present invention will be described referring to Fig. 1. A tray-shaped container of this embodiment is adapted for use to package a relatively dry food. A composition for forming this container comprises 20 % of a bamboo fiber, 40 % of a reed fiber and 40 % of a *Lespedeza bicolor* fiber, mixed with each other. This composition was compressed and molded into a shape at a temperature of 200 °C, under a pressure of 3 kg/cm² for 24 sec. Hydrogen bonds appearing between the fibers did consolidate them together to give the container a shape of tray. In the manufacturing process, a sheet of such a composition was roughly molded at first to have a rim surrounded by a flash. Then, a second step of finishing the container was carried out to remove the flash from the rim, thereby providing a finished tray as shown in Fig. 1.

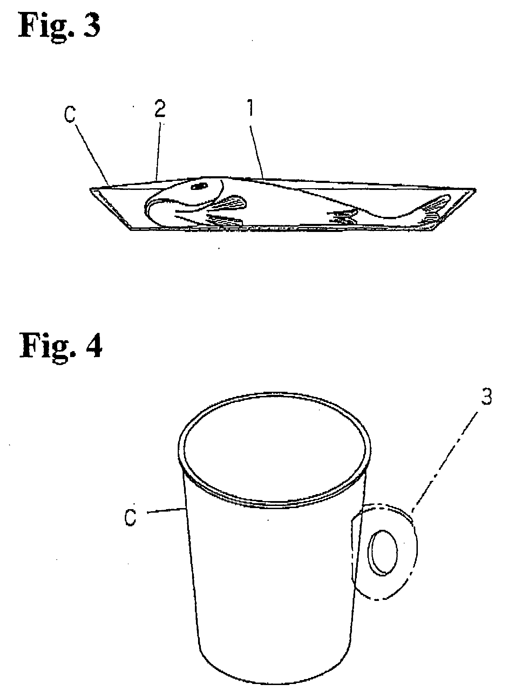

In a second embodiment illustrated in Figs. 2 and 3, another tray is provided for use with a relatively wet food such as any pieces of meat. A composition for forming this container comprises 20 % of a bamboo fiber, 40 % of a reed fiber and 40 % of a *Lespedeza bicolor* fiber, mixed with each other. Blended with this composition is 2 % of a polyacrylamide as a waterproofing and reinforcing agent, thus giving a finished mixture. This mixture also was molded into a shape at 200 °C, under 3 kg/cm² for 24 sec. Hydrogen bonds appearing between the fibers did consolidate them together firmly to make the container maintain a shape of tray. Also, a two-step process was employed in manufacture of the tray of this embodiment. Fig. 2 shows the food container empty but ready to use, with Fig. 3 illustrating it in use. Although not shown in the drawings, the described mixture may be used to mold similarly to second embodiment another container that is of a different shape to pack certain precooked lunches.

Now, Fig 4 is referred to for description of a third embodiment, in which a disposable coffee cup is manufactured for use with an automatic vending machine. A composition for forming this container comprises 30 % by weight of a bamboo fiber, 35 % by weight of a reed fiber and 35 % by weight of a *Lespedeza bicolor* fiber, mixed with each other. Blended with this composition are 2 % by weight of a polyacrylamide as a water-proofing and reinforcing agent and 3 % by weight of a silicone-based water repellent. Such a mixture was dispersed in water to form a slurry, which was then filtered through a screen to give a wet cubic article. This article was of a configuration corresponding to a finished container, and subse-quently thermally compressed into a shape at 200 °C, under 3 kg/cm² for 24 sec. Fig. 4 shows a resultant coffee cup, the reference symbol 'C' de-noting a body thereof. This cup may not necessarily be used in the vend-ing machine, but alternatively be combined with an amount of coffee beans, a filter and so on to provide an assembled and packed coffee set for sale. In this case, the cup may have a grip 3 that will be made integral with the body at the finishing step in manufacture process, as indicated at the phantom lines in Fig. 4. It will be apparent that the same mixture as used in this embodiment may likewise be molded into another container for

## Claims

1. A food container molded by compressing a composition that com-prises a non-boiled bamboo fiber blended with a non-boiled mixture of Gramineae plant fibers and Leguminosae plant fibers such as Lespedeza fibers.

2. A food container molded by compressing a composition that com-prises a non-boiled bamboo fiber blended with a non-boiled mixture of Gramineae plant fibers and Leguminosae plant fibers such as Lespedeza fibers, wherein the composition further contains noticeable amounts of a water repellent and a reinforcing agent.

3. A food container as defined in claim 1 or 2, wherein content of the bamboo fiber in the composition does fall within a range from 7 % by weight to 50 % by weight.

4. A food container as defined in claim 1 or 2, wherein ratio by weight of the Gramineae plant fibers to the Leguminosae plant fibers is generally 1 : 1.
